# EUROPÄISCHE PATENTSCHRIFT

(11) **EP 1 915 973 B1**
(45) Veröffentlichungstag und Bekanntmachung des Hinweises auf die Patenterteilung: **10.03.2010**
(21) Anmeldenummer: 07019094.7
(22) Anmeldetag: 27.09.2007
(51) Int. Cl.: A61C 13/20, F27B 17/02, F27D 19/00

(54) **Verfahren zum Betrieb eines Pressofens sowie Pressofen**
Method for operating a press furnace and press furnace
Procédé de fonctionnement d'un four à pression ainsi que four à pression

(30) Priorität: 27.10.2006 DE 102006050830
(43) Veröffentlichungstag der Anmeldung: 30.04.2008
(73) Patentinhaber: Ivoclar Vivadent AG, 9494 Schaan (LI)
(72) Erfinder: Jussel, Rudolf, 6806 Feldkirch-Tosters (AT); Bürke, Harald, 6820 Frastanz (AT)
(74) Vertreter: Baronetzky, Klaus

(56) Entgegenhaltungen:
- EP-A- 0 989 377
- DE-A1- 19 913 891
- DE-C1- 4 002 358

## Beschreibung

Die Erfindung betrifft ein Verfahren zum Betrieb eines Pressofens, gemäß dem Oberbegriff von Anspruch 1, sowie einen Pressofen gemäß dem Oberbegriff von Anspruch 10.

Ein derartiger Pressofen ist beispielsweise aus der DE 199 13 891 C2 bekannt. Dieser Pressofen zeichnet sich durch die Realisierung eines besonderen Steuerverfahrens aus, bei dem eine Presskraft erfasst wird und die Reduktion der Eindringgeschwindigkeit in eine Einbettmasse als Abschaltsignal für dem Pressvorgang herangezogen wird. Falls die Eindringgeschwindigkeit bei einem vorgewählten Druck zu hoch wird, kannals wirkende Maßnahme der Druck abgesenkt werden.

Hiermit lässt sich bei einem störungsfreien Betrieb eines Pressofens eine optimierte Befüllung der Hohlräume und in gewissem Maße auch eine Nachverdichtung des eingebrachten keramischen Dentalrestaurationsmaterial sicherstellen. Um dies zu erreichen, wird eine vorgegebenen Abschaltschwelle, beispielsweise von 0,3 mm pro 3 min, festgelegt, und wenn die Eindringgeschwindigkeit unter diesen Wert fällt, wird der Presskolben abgeschaltet. Zur Vermeidung eines Platzens der Einbettmassenmuffel soll die Presskraft unterhalb eines bestimmten Werts, der einen Sicherheitsabstand zur maximal möglichen Presskraft aufweist, liegen.

Zwar ist dieses Verfahren zur Steuerung der Eindringgeschwindigkeit an sich gut und hat sich bewährt. Es wäre jedoch wünschenswert, die Zykluszeit für das Pressen weiter zu reduzieren, ohne dass die Gefahr bestände, dass eine schlechteres Restaurationsergebnis vorliegt. In diesem Zusammenhang ist es insbesondere wichtig, eine ausreichende Nachpresszeit sicherzustellen, da hierdurch die Festigkeit des Dentalrestaurats wesentlich bestimmt wird.

Es sind verschiedene Maßnahmen bekannt geworden, um den Abschaltzeitpunkt des Ofens zu optimieren. So zeigt die DE 40 02 358 C1 die Erfassung einer Druckzunahme bei einer vorgegebenen Votriebsgeschwindigkeit des Pressstempels. Bei dieser Lösung muss jedoch zusätzlich die Kolbengeschwindigkeit erfasst werden, und bekanntlich verschlechtert jeder zusätzlich vorgesehene Fühler, dessen Ausgangssignal zur Steuerung herangezogen wird, die Zuverlässigkeit der Steuerung.

Ferner ist es bereits vorgeschlagen worden, die Einbettmasse so zu realisieren, dass sie etwas elastischer ist und insofern weniger zur Rissbildung neigt. Dies ist zwar durch die entsprechende Bereitstellung einer hierfür geeigneten Mischung grundsätzlich möglich. Nachteilig hierbei ist jedoch, dass dann die Hohlräume, die für die Ausbildung der Dentalrestaurate bestimmt sind, etwas weniger formtreu sind, so dass die Dentalrestaurationsteile dann häufig spanabhebend bearbeitet werden müssen, was den Herstellvorgang dann wiederum verlängert.

Demgegenüber liegt der Erfindung die Aufgabe zugrunde, ein Verfahren zum Betrieb eines Pressofens gemäß dem Oberbegriff von Anspruch 1 sowie eines Pressofens gemäß dem Oberbegriff von Anspruch 10 zu schaffen, die die Verwendung von besonders formtreuen Einbettmassen erlauben, ohne dass die Presskraft sicherheitshalber reduziert werden müsste, oder das Risiko eines Platzens der Einbettmassenmuffel steigt.

Diese Aufgabe wird erfindungsgemäß durch Anspruch 1 bzw. Anspruch 9 gelöst. Vorteilhafte Weiterbildungen ergeben sich aus den Unteransprüchen.

Überraschend ermöglicht das erfindungsgemäße Betriebsverfahren für einen Pressofen eine vergleichsweise rasche Zykluszeit mit einer recht hohen Presskraft. Die Abweichung der Eindringgeschwindigkeit von einem vorgegebenen Profil wird erfindungsgemäß erfasst, wobei es sich versteht, dass grundsätzlich unterschiedliche Muffeln unterschiedliche Eindringgeschwindigkeitsprofile zeigen. Stets sind jedoch bei Dentalrestaurationsteilen Presskanäle vorgesehen, an die sich Hohlräume anschließen, die für die Ausbildung der Dentalrestaurationsteile vorgesehen sind. Beim Eindringen der keramischen Masse in die Presskanäle sinkt die Eindringgeschwindigkeit typischerweise, nachdem dort die Reibung recht hoch ist und zunimmt, je länger die wirksame Reibungsfläche zwischen dem keramischen Dentalmaterial und der Kanalwand ist. Sobald die Front der Einbettmasse den Hohlraum erreicht hat, nimmt die Reibung jedoch nicht oder nicht wesentlich weiter zu; dies entspricht dementsprechend einem Gleichbleiben der Eindringgeschwindigkeit, bis der Hohlraum gefüllt ist.

Auch wenn die Länge der Presskanäle und die Größe der Hohlräume von Muffel zu Muffel unterschiedlich sind, besteht doch stets dieses prinzipielle Eindringgeschwindigkeitsprofil, an dass sich in einem dritten Presszeitabschnitt eine weitere Reduktion der Eindringgeschwindigkeit anschließt, während welchem Zeitabschnitt eine Verdichtung des Dentalmaterials erfolgt.

Erfindungsgemäß wird nun festgestellt, wenn die Eindringgeschwindigkeit von diesem prinzipiellen Verlauf abweicht, nämlich sich mehr erhöht, als es dem Eindringgeschwindigkeitsprofil entspricht. Dies bedeutet nämlich, dass sich zu diesem Zeitpunkt ein weiterer Hohlraum eröffnet, typischerweise wenn die Muffel platzt. Erfindungsgemäß lässt sich überraschend dennoch das Dentalrestaurationsteil verwenden, mindestens dann, wenn der Pressvorgang relativ weit fortgeschritten ist.

Jedenfalls ermöglicht das erfindungsgemäße Signal die hierfür geeigneten Reaktionen, nämlich einen Abbruch des Pressvorgangs.

Vorteilhaft ist die Überwachung des Eindringgeschwindigkeitsprofil auch dann, wenn durch den Zahntechniker beispielsweise Objekte ungünstig in der Einbettmasse positioniert werden, und dies z.B. zu einer Schwächung der Einbettmasse oder zu einer vermehrten Rissneigung führt.

Es versteht sich, dass es besonders günstig ist, wenn das erfindungsgemäße Fehler-Abbruchkriterium mit einem Standard-Abbruchkriterium verknüpft wird, bei dem, wie es bereits bekannt geworden ist, erfasst wird, dass die Eindringgeschwindigkeit unter einen vorgegebenen Schwellwert sinkt. Erfindungsgemäß ist es besonders günstig, dass, wenn der aktuelle Wert der Eindringgeschwindigkeit kontinuierlich überwacht wird, beispielsweise mit einer Abtastrate von 0,1 bis 10 Sekunden, bevorzugt mit einer Abtastrate von etwa 1 Sekunde.

Als zusätzliches Abbruchkriterium kann auch die aufgebrachte Presskraft eingesetzt werden. In diesem Zusammenhang lässt sich die Tatsache ausnutzen, dass der Spindelantrieb des Pressstempels typischerweise eine maximale Vortriebsgeschwindigkeit hat, und wenn das Dentalmaterial bzw. die platzende Muffel keinen oder einen zu geringen Widerstand bietet, sinkt die Presskraft und der Pressstempel bewegt sich mit maximaler Vortriebsgeschwindigkeit nach unten.

Bei einem Spindelantrieb für die Pressstempel lässt sich in vorteilhafter Ausgestaltung die Vortriebsgeschwindigkeit auch in Umdrehungen pro Minute messen.

Erfindungsgemäß besonders bevorzugt ist es aber auch, dass bei einem etwaigen Muffelplatzen der Pressantrieb sofort gestoppt werden kann. Hierdurch lässt sich ein Auseinanderklaffen der Muffel mit hoher Wahrscheinlichkeit vermeiden, so dass Schäden an dem Brennraum bzw. dem Heizelement bzw. Thermoelement, sich mit hoher Wahrscheinlichkeit vermeiden lassen.

Erfindungsgemäß soll nämlich das Umkippen von Muffelteilen und damit die Beschädigung des Thermoelements bzw. dessen Schutzrohr nach Möglichkeit vollständig vermieden werden.

Erfindungsgemäß ist es vorgesehen, dass während des Pressvorgangs eine Zunahme der Eindringgeschwindigkeit und/oder eine Abnahme der Einpresskraft erfasst wird und basierend hierauf ein Abbruchsignal abgegeben wird, über welches die Bewegung des Pressstempels unterbrochen wird.

In einer weiteren vorteilhaften Ausgestaltung ist es vorgesehen, dass dass das Signal abgegeben wird, wenn die Zunahme der Eindringgeschwindigkeit und/oder die Abnahme der Einpresskraft über einen vorgegebenen Zeitraum hinaus erfolgt, welcher Zeitraum insbesondere einstellbar ist.

In einer weiteren vorteilhaften Ausgestaltung ist es vorgesehen, dass der Weg des Pressstempels und/oder die Zeit und/oder die Kraft, in der der Pressstempel einen bestimmten Weg zurücklegt, insbesondere kontinuierlich oder in regelmäßigen Zeitabständen wiederkehrend, gemessen wird und basierend hierauf die Eindringgeschwindigkeit und/oder deren Änderungen erfasst wird.

In einer weiteren vorteilhaften Ausgestaltung ist es vorgesehen, dass der Pressstempel mit einer vorgegebenen Kraft, insbesondere einer konstanten Kraft, beaufschlagt wird und die Bewegung des Pressstempels ausgehend von einem Startsignal eines Presszyklus überwacht wird.

In einer weiteren vorteilhaften Ausgestaltung ist es vorgesehen, dass die Zunahme der Eindringgeschwindigkeit und/oder die Abnahme der Einpresskraft als alternatives Abbruchkriterium für den Presszyklus verwendet wird und dass der Presszyklus beendet wird.

In einer weiteren vorteilhaften Ausgestaltung ist es vorgesehen, dass die Eindringgeschwindigkeit gegen Ende des Presszyklus insbesondere während, der Nachpresszeit, nahe 0 im Wesentlichen konstant ist und bei Abweichen der Eindringgeschwindigkeit von der Konstanz, also beim erneuten Ansteigen der Eindringgeschwindigkeit, ein Fehlersignal abgegeben wird.

In einer weiteren vorteilhaften Ausgestaltung ist es vorgesehen, dass die Presskraft nach dem Erreichen der Nenn-Presskraft, insbesondere während des Presszyklus, im Wesentlichen konstant gehalten wird und dass anschließend an eine vorgegebene Nachpresszeit mit einer konstanten geringen Eindringgeschwindigkeit, die auch Null betragen kann, die Presskraft abgeschaltet wird.

Erfindungsgemäß ist vorgesehen, dass als Alternative eine plötzliche Abnahme der Einpresskraft aufgrund zu geringer Nachregelzeit für die Eindringgeschwindigkeit, ebenfalls zu einem Abbruch des Pressprozesses verwendet werden kann.

Erfindungsgemäß ist vorgesehen, dass eine Zunahme der Eindringgeschwindigkeit oder eine Abnahme der Einpresskraft ein Signal auslöst, das insbesondere einen Fehler anzeigt, durch welches die Bewegung des Pressstempels unterbrochen wird.

In einer weiteren vorteilhaften Ausgestaltung ist es vorgesehen, dass auf den Pressstempel eine im Wesentlichen konstante Presskraft wirkt und die Eindringgeschwindigkeit des Pressstempels in die Einbettmasse und/oder die Einpresskraft kontinuierlich erfassbar ist, wobei eine Zunahme der Eindringgeschwindigkeit und/oder die Abnahme der Einpresskraft ein Fehlersignal abgibt.

In einer weiteren vorteilhaften Ausgestaltung ist es vorgesehen, dass der Pressofen eine Steuereinheit aufweist, die die Eindringgeschwindigkeit des Pressstempels und/oder die Einpresskraft erfasst und abspeichert und mit einem vorgegebenen Profil der Eindringgeschwindigkeit sowie der Einpresskraft vergleicht.

In einer weiteren vorteilhaften Ausgestaltung ist es vorgesehen, dass der Pressstempel Teil einer krafterzeugenden Vorrichtung ist oder mit einer solchen zusammen wirkt.

In einer weiteren vorteilhaften Ausgestaltung ist es vorgesehen, dass die Erfassund der Eindringgeschwindigkeit des Pressstempels und/oder der Einpresskraft über die krafterzeugende Vorrichtung erfolgt.

In einer weiteren vorteilhaften Ausgestaltung ist es vorgesehen, dass die Eindringgeschwindigkeit während eines ersten Presszeitabschnitts sinkt, und während eines zweiten Presszeitabschnitts im Wesentlichen konstant bleibt und dass eine Abweichung von mindestens einer vorgegebenen Eindringgeschwindigkeit das Signal abgibt.

In einer weiteren vorteilhaften Ausgestaltung ist es vorgesehen, dass die Eindringgeschwindigkeit während eines dritten Presszeitabschnitts sinkt und bei Abweichung von einem vorgegebenen Eindringgeschwindigkeitsprofil ein Fehlersignal abgegeben wird.

Weitere Vorteile, Einzelheiten und Merkmale ergeben sich aus der nachfolgenden Beschreibung eines Ausführungsbeispiels anhand der Zeichnung.

Es zeigen:
- Fig. 1: einen teilweisen Schnitt durch einen erfindungsgemäßen Pressofen unter Darstellung der Muffel in aufgeschnittener Form; und
- Fig. 2: eine Darstellung eines erfindungegemäßen Profils der Eindringgeschwindigkeit, aufgetragen über der Zeit.

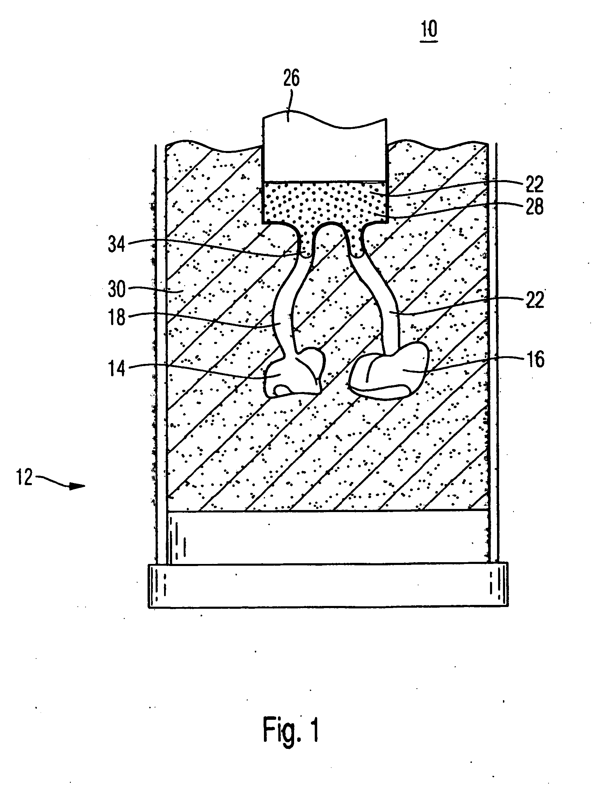

Der in Fig. 1 partiell dargestellte Pressofen 10 ist für das Einstellen einer Muffel 12 in einen Brennraum bestimmt.

In an sich bekannter Weise ist die Muffel 12 in dem Brennraum aufgestellt. Sie weist Hohlräume 14 und 16 auf, die für die Ausbildung von Dentalrestaurationsteilen als Gießformen bestimmt sind. Die Hohlräume 16 und 14 sind über Presskanäle 18 und 20 mit einem Vorpressraum 22 verbunden, der im Wesentlichen zylindrisch ausgebildet ist. In dem Vorpressraum 22 ist ein Pressstempel 26 schiebebeweglich gelagert. Der Pressstempel 22 drückt auf einen Rohling 28 aus keramischen Dentalmaterial, der sich in dem in Fig. 1 dargestellten Zustand bereits teilweise in die Presskanäle 18 und 20 hineinerstreckt.

Erfindungsgemäß besteht das Material der Muffel 12 aus einem vergleichsweise harten und temperaturfesten Gipsmischung 30. Auch bei Druck durch die Presskraft des Pressstempels 26 bleibt die Form der Hohlräume 14 und 16 erhalten, so dass das Dentalrestaurationsteile sich mit der gewünschten Präzision herstellen lässt.

Es versteht sich, dass die Einbettmasse 30 in beliebiger geeigneter Weise hergestellt ist. Insbesondere ist es günstig, die Hohlräume 14 und 16 relativ zentral in der Einbettmasse anzuordnen, so dass eine gute Seitenabstützung über die umgebende Einbettmasse 30 gewährleistet ist.

Erfindungsgemäß ist es vorgesehen, mit vergleichsweise großer Presskraft - und damit einsprechend hoher Eindringgeschwindigkeit - die Hohlräume 14 und 16 zu befüllen. Über die erfindungsgemäße Steuerung ist gewährleistet, dass dennoch qualitativ gute Dentalrestaurate erzeugbar sind.

Besonders günstig ist es auch, dass bei einer geringen Verweildauer des heißen Dentalmaterials in der Muffel die Neigung zu Reaktionen zwischen dem Dentalmaterial und der Einbettmasse gering ist.

Aus Fig. 1 ist auch ersichtlich, dass sich das Dentalmaterial 28 beim Eintritt in die Presskanäle 18 und 22 verformt. Typischerweise entsteht, wie es bei 34 ersichtlich ist, eine konvexe Vorderseite des Dentalmaterial 28, allein schon aufgrund der Reibung zwischen der Wand des Presskanals 18 und dem Dentalmaterial.

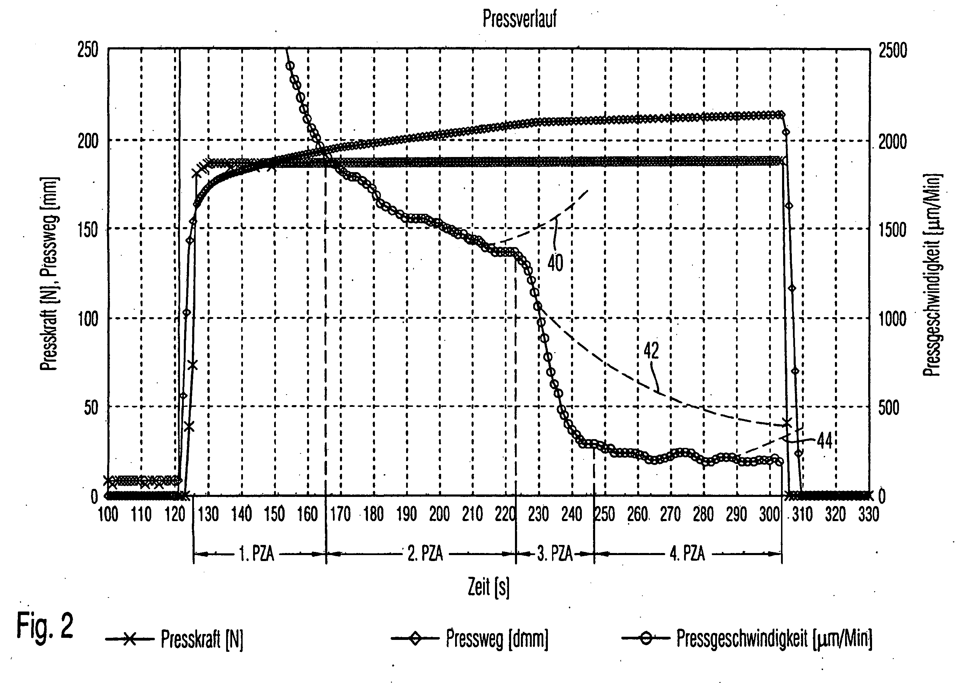

Aus Fig. 2 ist ersichtlich, in welcher Weise sich die Eindringgeschwindigkeit, die Presskraft und die Position des Pressstempels während eines Presszyklus entwickelt. Wie ersichtlich ist, wird der Pressstempel zum Zeitpunkt t = 120 sek. aktiviert. Die Presskraft nimmt bis etwa zum Zeitpunkt t = 130 sek. auf den Nennwert 200 N zu. Während dieser Zeit schiebt der Pressstempel den Rohling 28 durch den Vorpressraum 20 nach unten, wobei die Eindringgeschwindigkeit ausgesprochen hoch ist, nachdem praktisch kein Widerstand besteht. Dies ist in Fig. 2 dadurch deutlich gemacht, dass die Kurve der Eindringgeschwindigkeit oberhalb von 3000 µm/Min ist, nämlich beim Maximalwert des Spindelantrieb des Pressstempels.

Etwa bei t = 125 sek. hat der Rohling den Eingang der Presskanäle 18 erreicht. Ab diesem Zeitpunkt erfolgt eine erheblich langsamere Verlagerung der Position des Pressstempels, wie es aus der Kurve Pressweg ersichtlich ist.

Die Presskanäle 18 und 20 werden gefüllt, was aufgrund der gleichbleibenden Presskraft von 200 N mit einer stark absinkenden Eindringgeschwindigkeit Pressgeschwindigkeit einhergeht.

Etwa bei t = 165 sek. erfolgt die Abnahme der Eindringgeschwindigkeit Pressgeschwindigkeit deutlich geringer. Zu diesem Zeitpunkt ist der erste Presszeitabschnitt abgeschlossen, und das Dentalmaterial hat die Presskanäle 18 und 20 mit seiner Front vollständig durchtreten. Das Dentalmaterial gelangt nun in die Hohlräume 14 und 16, wo praktisch keine oder nur geringe Zunahme der Wandreibungskräfte besteht. Dies findet darin seinen Ausdruck, dass die Eindringgeschwindigkeit von t = 160 sek. bis etwa t = 210 sek. lediglich von 1900 µm/Min auf 1400 µm/Min sinkt.

Zum Zeitpunkt t = 210 sek. sind die Hohlräume 14 und 16 nahezu vollständig gefüllt. Dementsprechend nimmt die Eindringgeschwindigkeit recht rasch weiter ab, so dass sich an den zweiten Presszeitabschnitt bis 210 sek. ein dritter Presszeitabschnitt bis t = 245 sek. anschließt, in welchem die Eindringgeschwindigkeit auf etwa 300 µm/Min sinkt - gleichbleibende Presskraft stets vorausgesetzt.

Zu diesem Zeitpunkt sind auch Luftbläschen und dergleichen weitgehend aus Dentalmaterial herausgedrückt, und es erfolgt eine weitere Verfestigung und Sinterung des körnigen und keramischen Dentalmaterials; über einen vorgegebenen Zeitraum, der sich im dargestellten Beispielfall zwischen t = 245 sek. und t = 305 sek. als vierter Presszeitabschnitt erstreckt, der sogenannten Nachpresszeit.

Zu diesem Zeitpunkt hat der Pressstempel seine unterste Position erreicht, etwa bei 215 mm. Die Presskraft und der Presszyklus wird abrupt abgeschaltet und der Stempel hochgefahren, so dass die Abkühlphase des Dentalrestaurats in der Muffel beginnen kann.

Erfindungsgemäß ist es vorgesehen, bei grundsätzlicher Zunahme der Eindringgeschwindigkeit Pressgeschwindigkeit von dem hier dargestellten Profil ein Fehlersignal abzugeben.

Hierzu wird die Eindringgeschwindigkeit bevorzugt über recht kurze Zeitintervalle gemessen, jedoch über einen Zeitraum von beispielsweise 7 sek., der aber auch kleiner oder größer gewählt werden kann, gemittelt.

Wenn die Muffel bereits gegen Ende des zweiten Presszeitabschnitts platzt, ergibt sich entsprechend der gestrichelten Kurve 40 eine Zunahme der Eindringgeschwindigkeit, beispielsweise ab t = 220 sek. Die Vorwärtsbewegung des Pressstempels wird in diesem Fall sofort unterbunden, so dass die Muffelteile nicht seitlich weggedrückt werden und den Ofen oder mindestens das Thermoelement schädigen.

Wenn die Abweichung von der vorgegebenen Pressgeschwindigkeit erst in dem dritten Presszeitabschnitt erfolgt, beispielsweise entsprechend der Kurve 42, kann immerhin davon ausgegangen werden, dass die Hohlräume 14 und 16 vollständig gefüllt sind. In diesem Fall ist das Dentalrestaurat grundsätzlich verwendbar, wobei es bei einer Vielzahl von Hohlräumen, entsprechend gleichzeitig hergestellten Dentalrestaurationsteilen, auch möglich ist, dass lediglich ein Teil der Restaurate verwendbar ist.

Wie aus Fig. 2 ersichtlich ist, kann die Kurve der Fehlerfall-Eindringgeschwindigkeit 42 sich dann zunächst im Wesentlichen horizontal erstrecken. Ein derartiger Kurvenverlauf ist möglich, wenn beispielsweise ein Lunker in der Einbettmasse eingeschlossen ist und der entsprechende Hohlraum anschließend in die Hohlräume 14 und 16 ebenfalls gefüllt wird. Dieser Verlauf der Eindringgeschwindigkeit ist für die Ofenschädigung wesentlich weniger gefährlich als der Verlauf der Kurve 40, denn die Muffel selbst ist zunächst an ihrer Aussenseite intakt und insofern nicht vollständig geborsten. Es versteht sich, dass dieses Bestens jedoch zu einem späteren Zeitpunkt erfolgen kann.

Wenn die Eindringgeschwindigkeit entsprechend der Kurve 44 gemäß Fig. 2 verläuft, weist dies typischerweise darauf hin, dass mindestens nahezu alle Dentalrestaurate in den Hohlräumen 14 und 16 und gegebenenfalls den weiteren Hohlräumen verwendbar sind. Sie haben dann praktisch die gesamte Nachpresszeit durchlaufen, und die Endfestigkeit entspricht im Wesentlichen der gewünschten Endfestigkeit. Auch hier sollte jedoch umgehend dafür Sorge getragen werden, dass spätestens zum Zeitpunkt t = 305 Sekunden die Abschaltung erfolgt, was wiederum eine versehentliche Schädigung des Pressofens verhindert.

## Patentansprüche

1. Verfahren zum Betrieb eines Pressofens, inbesondere für Dentalmaterialien, mit einer Einbettmasse, in welche das vorzugsweise keramische Dentalmaterial über einen Pressstempel (26) einbringbar ist, wobei die Eindringgeschwindigkeit des Pressstempels (26) erfasst wird, wobei während des Pressvorgangs eine Zunahme der Eindringgeschwindigkeit und/oder eine Abnahme der Einpresskraft erfasst wird und basierend hierauf ein Abbruchsignal abgegeben wird, über welches die Bewegung des Pressstempels (26) unterbrochen wird.

2. Verfahren nach Anspruch 1, **dadurch gekennzeichnet, dass** das Signal abgegeben wird, wenn die Zunahme der Eindringgeschwindigkeit und/oder die Abnahme der Einpresskraft über einen vorgegebenen Zeitraum hinaus erfolgt, welcher Zeitraum insbesondere einstellbar ist.

3. Verfahren nach Anspruch 1 oder 2, **dadurch gekennzeichnet, dass** der Weg des Pressstempels (26) und/oder die Zeit und/oder die Kraft, in der der Pressstempel (26) einen bestimmten Weg zurücklegt, insbesondere kontinuierlich oder in regelmäßigen Zeitabständen wiederkehrend, gemessen wird und basierend hierauf die Eindringgeschwindigkeit und/oder deren Änderungen erfasst wird.

4. Verfahren nach einem der vorhergehenden Ansprüche, **dadurch gekennzeichnet, dass** der Pressstempel (26) mit einer vorgegebenen Kraft, insbesondere einer konstanten Kraft, beaufschlagt wird und die Bewegung des Pressstempels (26) ausgehend von einem Startsignal eines Presszyklus überwacht wird.

5. Verfahren nach einem der vorhergehenden Ansprüche, **dadurch gekennzeichnet, dass** die Zunahme der Eindringgeschwindigkeit und/oder die Abnahme der Einpresskraft als alternatives Abbruchkriterium für den Presszyklus verwendet wird und dass der Presszyklus beendet wird.

6. Verfahren nach einem der vorhergehenden Ansprüche, **dadurch gekennzeichnet, dass** die Eindringgeschwindigkeit gegen Ende des Presszyklus insbesondere während, der Nachpresszeit, nahe 0 im Wesentlichen konstant ist und bei Abweichen der Eindringgeschwindigkeit von der Konstanz, also beim erneuten Ansteigen der Eindringgeschwindigkeit, ein Fehlersignal abgegeben wird.

7. Verfahren nach einem der vorhergehenden Ansprüche, **dadurch gekennzeichnet, dass** die Presskraft nach dem Erreichen der Nenn-Presskraft, insbesondere während des Presszyklus, im Wesentlichen konstant gehalten wird und dass anschließend an eine vorgegebene Nachpresszeit mit einer konstanten geringen Eindringgeschwindigkeit, die auch Null betragen kann, die Presskraft abgeschaltet wird.

8. Verfahren nach einem der vorhergehenden Ansprüche, **dadurch gekennzeichnet, dass** als Alternative eine plötzliche Abnahme der Einpresskraft aufgrund zu geringer Nachregelzeit für die Eindringgeschwindigkeit, ebenfalls zu einem Abbruch des Pressprozesses verwendet werden kann.

9. Pressofen, insbesondere für Dentalmaterialien, mit einer Einbettmasse (30), in welche ein vorzugsweise keramisches Dentalmaterial über einen Pressstempel (26) einbringbar ist und mit einer Steuereinheit zum Erfassen der Eindringgeschwindigkeit des Pressstempels (26), wobei die Steuereinheit bei einer Zunahme der Eindringgeschwindigkeit oder bei einer Abnahme der Einpresskraft ein Abbruchsignal ausgibt, das insbesondere einen Fehler anzeigt, und über welches die Bewegung des Pressstempels (26) unterbrochen wird.

10. Pressofen nach Anspruch 9, **dadurch gekennzeichnet, dass** auf den Pressstempel (26) eine im Wesentlichen konstante Presskraft wirkt und die Steuereinheit die Eindringgeschwindigkeit des Pressstempels (26) in die Einbettmasse (30) und/oder die Einpresskraft kontinuierlich erfasst, wobei die Steuereinheit bei einer Zunahme der Eindringgeschwindigkeit und/oder einer Abnahme der Einpresskraft ein Fehlersignal abgibt.

11. Pressofen nach einem der Ansprüche 9 oder 10, **dadurch gekennzeichnet, dass** die Steuereinheit die Eindringgeschwindigkeit des Pressstempels (26) und/oder die Einpresskraft erfasst und abspeichert und mit einem vorgegebenen Profil der Eindringgeschwindigkeit sowie der Einpresskraft vergleicht.

12. Pressofen nach einem der Ansprüche 9 bis 11, **dadurch gekennzeichnet, dass** der Pressstempel (26) Teil einer krafterzeugenden Vorrichtung ist oder mit einer solchen zusammen wirkt.

13. Pressofen nach einem der Ansprüche 9 bis 12, **dadurch gekennzeichnet, dass** die Steuereinheit die Eindringgeschwindigkeit des Pressstempels (26) und/oder die Einpresskraft über die krafterzeugende Vorrichtung erfasst.

## Claims

1. A method for operating a press oven, in particular for dental materials, with an embedding compound into which the preferably ceramic dental material can be introduced with the aid of a press ram (26), the speed of penetration of the press ram (26) being detected, wherein during the pressing operation, an increase in the speed of penetration and/or a decrease in the injection or press-in force is detected, and, based on this, a stop signal is output by means of which the movement of the press ram (26) is interrupted.

2. The method as claimed in claim 1, wherein the signal is output when the increase in the speed of penetration and/or the decrease in the injection or press-in force take place during a time period that exceeds a predetermined time period, which time period is in particular adjustable.

3. The method as claimed in claim 1 or 2, wherein the path of the press ram (26) and/or the time and/or the force with which the press ram (26) covers a given path or distance, is measured, in particular continuously, or recurrently at regular time intervals, and, based on this, the speed of penetration and/or changes thereof are detected.

4. The method as claimed in one of the preceding claims, wherein a given force, in particular a constant force, is applied to the press ram (26), and wherein the movement of the press ram (26) is monitored starting from a start signal of a pressing cycle.

5. The method as claimed in one of the preceding claims, wherein the increase in the penetration speed and/or the decrease in the injection or press-in force is used as an alternative stop criterion for the pressing cycle, and wherein the pressing cycle is concluded.

6. The method as claimed in one of the preceding claims, wherein the speed of penetration is substantially constant near 0 towards the end of the pressing cycle and in particular during the repressing time, and, if the speed of penetration deviates from constancy, that is to say upon a renew increase in the speed of penetration, an error signal is output.

7. The method as claimed in one of the preceding claims, wherein the pressing force, after having reached the nominal pressing force, in particular during the pressing cycle, is kept substantially constant, and wherein the pressing force is switched off after a predetermined repressing time with a constant low speed of penetration that can also be zero.

8. The method as claimed in one of the preceding claims, wherein, as an alternative, a sudden decrease in the injection or press-in force due to a too short readjustment or correction time for the speed of penetration, can also be used for stopping the pressing process.

9. A press oven, in particular for dental materials, with an embedding compound (30) into which a preferably ceramic dental material can be introduced with the aid of a press ram (26), and with a control unit for detecting the speed of penetration of the press ram (26), wherein, if there is an increase in the speed of penetration or a decrease of the injection or press-in force, the control unit outputs a stop signal, which in particular indicates an error, and with the aid of which signal the movement of the press ram (26) is interrupted.

10. The press oven as claimed in claim 9, wherein a substantially constant pressing force acts on the press ram (26) and wherein the control unit continuously detects the speed of penetration of the press ram (26) into the embedding compound (30) and/or the injection or press-in force, wherein the control unit outputs an error signal in case of an increase in the speed of penetration and/or a decrease of the the injection or press-in force.

11. The press oven as claimed in either one of the claims 9 or 10, wherein the control unit detects and stores the speed of penetration of the press ram (26) and/or the injection or press-in force and compares it to a given profile of the speed of penetration and of the injection or press-in force.

12. The press oven as claimed in one of the claims 9 through 11, wherein the press ram (26) is part of a force-generating device or interacts with such a device.

13. The press oven as claimed in one of the claims 9 through 12, wherein the control unit detects the speed of penetration of the press ram (26) and/or the injection or press-in force with the aid of the force-generating device.

## Revendications

1. Une procédure de fonctionnement d'un four de pressée, de préférence pour matériel dentaire, ce four présentant un revêtement, dans lequel le matériel dentaire, de préférence céramique, peut être introduit par un piston de pression (26), où la vitesse de pénétration du piston de pression (26) est saisie, où pendant le processus d'injection une augmentation de la vitesse de pénétration et/ou une réduction de la force de pression est saisi et en fonction de celles-ci un signal d'interruption est émis, par lequel le mouvement du piston de pression (26) est interrompu.

2. La procédure selon la revendication 1, **caractérisée en ce que** le signal est émis, si l'augmentation de la vitesse de pénétration et/ou la réduction de la force de pression a lieu au-delà d'un intervalle prédéfini, cet intervalle étant de préférence réglable.

3. La procédure selon la revendication 1 ou 2, **caractérisée en ce que** la course du piston de pression (26) et/ou le temps et/ou la force, dans lequel ou laquelle le piston de pression (26) parcourt une certaine course, est mesuré de préférence soit en continu, soit à des intervalles réguliers, et qu'en fonction de celles-ci la vitesse de pénétration et/ou les modifications de celle-ci sont saisies.

4. La procédure selon lune des revendications précédentes **caractérisée en ce que** le piston de pression (26) est alimenté avec une puissance prédéfinie, de préférence une puissance constante, et que le mouvement du piston de pression (26) est surveillé basé sur un signal de départ d'un cycle de pressée.

5. La procédure selon lune des revendications précédentes **caractérisée en ce que** l'augmentation de la vitesse de pénétration et/ou la réduction de la force de pression est utilisée comme critère alternatif d'annulation pour le cycle de pressée et que le cycle de pressée est terminé.

6. La procédure selon lune des revendications précédentes **caractérisée en ce que** la vitesse de pénétration vers la fin du cycle de presséée et notamment pendant le temps de repressée est essentiellement constante proche de 0 et lors de la déviation de la vitesse de pénétration de la constance, c'est-à-dire, lors de l'augmentation renouvelée de la vitesse de pénétration, un signal d'erreur est émis.

7. La procédure selon lune des revendications précédentes **caractérisée en ce que** la force de pression est tenue essentiellement constante lorsque la force de pression nominale est atteinte, surtout pendant le cycle de pressée, et qu'à continuation à un temps de repressée prédéfini avec une vitesse de pénétration constante faible, qui peut aussi s'élever à zéro, la force de pression est mise hors circuit.

8. La procédure selon lune des revendications précédentes **caractérisée en ce qu'**une réduction soudaine de la force de pression à cause d'un temps de rajustage trop faible pour la vitesse de pénétration, peut également être utilisé comme alternative pour interrompre le processus dinjection.

9. Un four de pressée, de préférence pour matériel dentaire, présentant un revêtement (30), dans laquelle un matériel dentaire de préférence céramique peut être introduit par l'intermédiaire dun piston de pression (26) et présentant un module de commande pour la saisie de la vitesse de pénétration du piston de pression (26), où le module de commande émet un signal d'interruption lors d'une augmentation de la vitesse de pénétration ou lors d'une réduction de la force de pression, qui indique de préférence une erreur, et par lequel le mouvement du piston de pression (26) est interrompu.

10. Le four de pressée selon la revendication 9, **caractérisé en ce qu'**une force de pression essentiellement constante agit sur le piston de pression (26), et le module de commande saisit la vitesse de pénétration du piston de pression (26) dans la masse d'encastrement (30) et/ou la force de pression de façon continue, où le module de commande émet un signal d'erreur lors d'une augmentation de la vitesse de pénétration et/ou d'une réduction de la force de pression.

11. Le four de pressée selon lune des revendications 9 ou 10, **caractérisé en ce que** le module de commande saisit et stocke la vitesse de pénétration du piston de pression (26) et/ou la force de pression et les compare à un profil prédéfini de la vitesse de pénétration ainsi que de la force de pression.

12. Le four de pressée selon lune des revendications 9 à 11, **caractérisée en ce que** le piston de pression (26) fait partie d'un dispositif producteur d'énergie ou agit ensemble avec un tel dispositif.

13. Le four de pressée selon lune des revendications 9 à 12, **caractérisée en ce que** lunité de commande saisit la vitesse de pénétration du piston de pression (26) et/ou la force de pression par l'intermédiaire du dispositif producteur d'énergie.
